# DEMANDE DE BREVET EUROPEEN

(11) **EP 1 722 262 A1**
(43) Date de publication de la demande: **15.11.2006**
(21) Numéro de dépôt: 06290740.7
(22) Date de dépôt: 10.05.2006
(51) Int. Cl.: G02B 23/08, F41H 5/26

(54) **Episcope perfectionné**

(30) Priorité: 11.05.2005 FR 0504797
(71) Demandeur: GIAT Industries, 78000 Versailles (FR)
(72) Inventeur: Matichard, Yves, 42370 Saint André d'Apchon (FR)
(74) Mandataire: Célanie, Christian

(57) **Abrégé**

L'invention a pour objet un épiscope (1) comportant un corps (2) renfermant au moins un prisme optique (4a,4b) interposé entre un oculaire (7) et un objectif (8), épiscope caractérisé en ce qu'il comprend au moins un filtre laser (9) qui recouvre l'oculaire (7) et un moyen (12) qui permet d'écarter le filtre (9) de l'oculaire (7) pour permettre une utilisation de l'épiscope sans filtre.

## Description

Le domaine technique de l'invention est celui des épiscopes et notamment des épiscopes utilisés dans les engins blindés.

Les épiscopes sont des organes classiques assurant la sécurité de l'observation à partir de l'intérieur d'un engin blindé.

Les épiscopes comprennent généralement un corps renfermant un ou deux prismes optiques qui sont interposés entre un oculaire et un objectif.

Ils permettent à l'équipage d'un véhicule blindé d'observer l'extérieur du véhicule en conservant la protection assurée par le blindage. L'observation peut ainsi se faire tête rentrée, trappe d'accès fermée.

Afin d'apporter une protection vis à vis des rayonnements Laser mis en oeuvre sur le champ de bataille, les épiscopes connus comportent généralement un filtre laser qui est interposé à l'intérieur de l'épiscope entre deux prismes optiques.

Il n'est pas possible d'utiliser un tel épiscope connu avec des jumelles de télémétrie laser. En effet le filtre intégré les rend inopérantes. Les jumelles de télémétrie laser doivent donc aujourd'hui être utilisées tête sortie hors de toute protection du blindage.

C'est le but de l'invention que de proposer un épiscope perfectionné qui assure le même niveau de protection laser que les épiscopes connus mais qui autorise l'utilisation des jumelles laser à l'abri et au travers de l'épiscope.

Ainsi invention a pour objet un épiscope comportant un corps renfermant au moins un prisme optique interposé entre un oculaire et un objectif, épiscope caractérisé en ce qu'il comprend au moins un filtre laser qui recouvre l'oculaire et un moyen qui permet d'écarter le filtre de l'oculaire pour permettre une utilisation de l'épiscope sans filtre.

Selon un premier mode de réalisation de l'invention, le filtre est solidaire d'un volet fixé au corps et le moyen permettant d'écarter le filtre est constitué par une articulation qui autorise un basculement du volet par rapport au corps.

Selon un deuxième mode de réalisation de l'invention, le moyen permettant d'écarter le filtre est constitué par au moins une glissière solidaire du corps et permettant un coulissement d'un volet portant le filtre ou du filtre lui-même.

L'articulation pourra incorporer un moyen ressort assurant un retour du volet devant l'oculaire.

Au moins un joint d'étanchéité/amortissement sera avantageusement interposé entre le volet et le corps de l'épiscope

L'épiscope pourra également comporter un moyen de blocage assurant un maintien du volet en position écartée.

Le filtre pourra être fixé d'une façon démontable par rapport au volet.

Un avantage de l'invention est que l'épiscope peut être utilisé avec tout système d'observation ou de mesure (jumelle, télémètre...) qui ne pouvait pas auparavant être utilisé au travers d'un épiscope classique doté d'un filtre laser.

Un autre avantage est que le volet rabattable pivotant permet d'assurer la sécurité des opérateurs en assurant la mise en place automatique du filtre laser dès que le moyen de mesure/observation est retiré.

L'invention sera mieux comprise à la lecture de la description qui va suivre de différents modes de réalisation, description faite en référence aux dessins annexés et dans lesquels :
- la figure 1 est une vue en coupe d'un épiscope selon l'art antérieur,
- la figure 2 est une vue en coupe d'un épiscope selon un premier mode de réalisation de l'invention,
- la figure 3 est une vue partielle de l'objectif de cet épiscope (vue suivant la flèche F repérée à la figure 2),
- la figure 4 montre l'épiscope avec son volet en position ouverte,
- la figure 5 montre un autre mode de réalisation d'un moyen de solidarisation du volet.

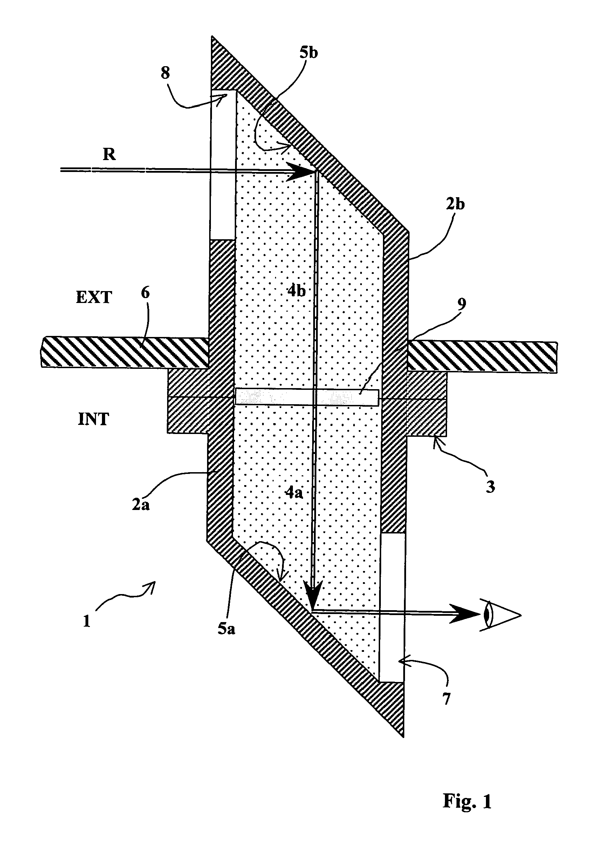

La figure 1 montre un épiscope 1 selon l'art antérieur. Cet épiscope comprend un corps 2 formé de deux coquilles 2a et 2b assemblées au niveau d'une bride médiane 3.

Le corps 2 délimite une cavité interne à l'intérieur de laquelle sont placés deux blocs optiques prismatiques 4a et 4b. Ces prismes comportent chacun une face inclinée réfléchissante 5a et 5b.

L'épiscope est fixé à une paroi 6 d'un véhicule. Le corps 2 se trouve ainsi en partie à l'extérieur (Ext) et en partie à l'intérieur (Int) du véhicule. L'oculaire 7 se trouve à l'intérieur alors que l'objectif 8 se trouve à l'extérieur.

Ainsi un rayon lumineux R qui provient de l'extérieur entre dans l'épiscope 1 par l'objectif 8 et après deux réflexions sur les surfaces réfléchissantes 5a et 5b ressort par l'oculaire 7.

Afin d'assurer une protection d'un utilisateur contre les rayonnements lasers, cet épiscope comporte un filtre laser 9 qui est interposé entre les deux blocs optiques 4a et 4b.

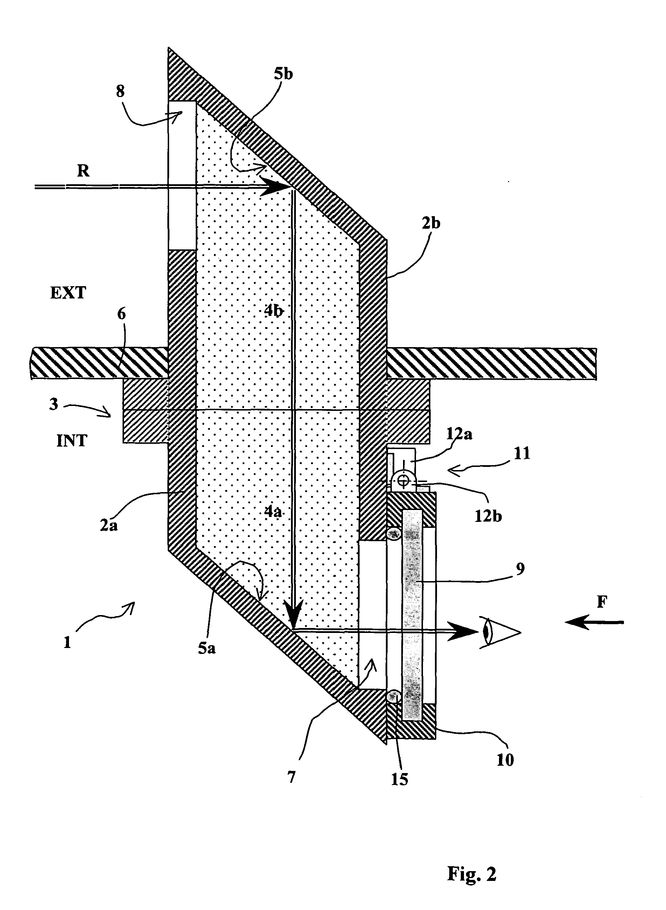

La figure 2 montre un épiscope 1 selon un premier mode de réalisation de l'invention. Pour la clarté de l'exposé, les mêmes numérotations sont utilisées pour l'épiscope selon invention et pour l'épiscope selon l'art antérieur pour ce qui concerne les pièces semblables.

Cet épiscope diffère du précédent en ce qu'il ne comporte pas de filtre laser interposé entre les deux blocs optiques 4a et 4b.

Sur l'épiscope selon invention, le filtre laser 9 est solidaire d'un volet 10 disposé devant l'oculaire 7. Ce volet est fixé au corps 1 par un moyen 11 qui permet d'écarter le filtre 9 de l'oculaire 7 pour permettre une utilisation de l'épiscope sans filtre.

Suivant ce mode particulier de réalisation, le moyen 11 permettant d'écarter le filtre est constitué par une articulation 12 comportant une partie 12a solidaire du corps 2 et une partie 12b solidaire du volet 10. L'axe de l'articulation autorise un basculement du volet par rapport au corps.

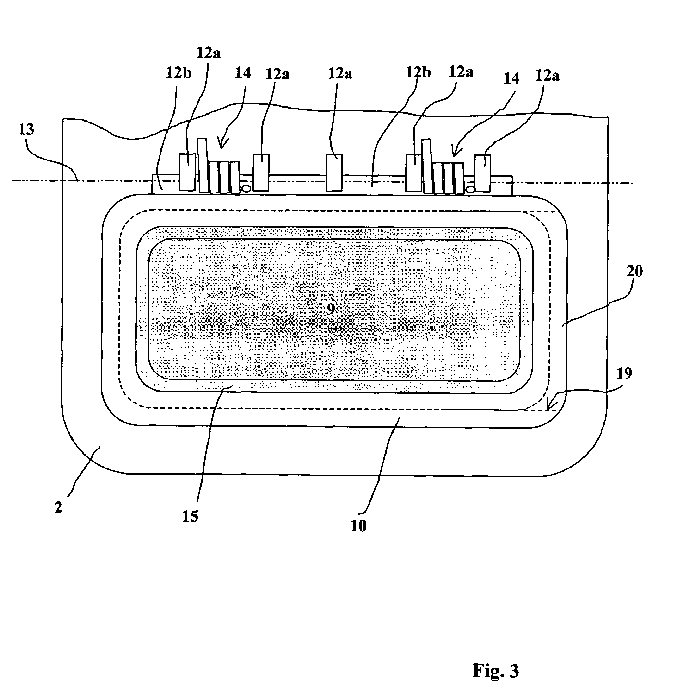

Comme cela est plus particulièrement visible sur la figure 3, la partie 12a est formée par cinq pattes collées au corps 2 et la partie 12b est formée d'un seule pièce avec le volet 10 et comporte un alésage recevant un axe de pivotement 13. La partie 12b présente également des fentes recevant les pattes 12a.

Par ailleurs un moyen ressort (ici deux ressorts de torsion 14) est interposé entre le volet 10 et le corps 2.

Ce moyen ressort permet d'assurer un retour du volet 10 devant l'oculaire 7 après écartement.

Un joint d'étanchéité et d'amortissement 15 est porté par le volet 10 et il vient s'appliquer sur le corps 2 lorsque le volet est en position fermée (figure 2).

Le joint a une forme qui correspond sensiblement à celle de l'oculaire (ici une forme rectangulaire). Il est réalisé en caoutchouc et pourra être collé au volet 10. Les ressorts 14 seront dimensionnés de façon à assurer une légère compression du joint lorsque le volet 10 est dans sa position fermée.

Ainsi il n'y a pas de passage de lumière entre la périphérie du volet 10 et le boîtier 2 et la visibilité est améliorée. Par ailleurs le joint 15 permet aussi d'amortir le rabat du volet 10 sous l'action des ressorts 14.

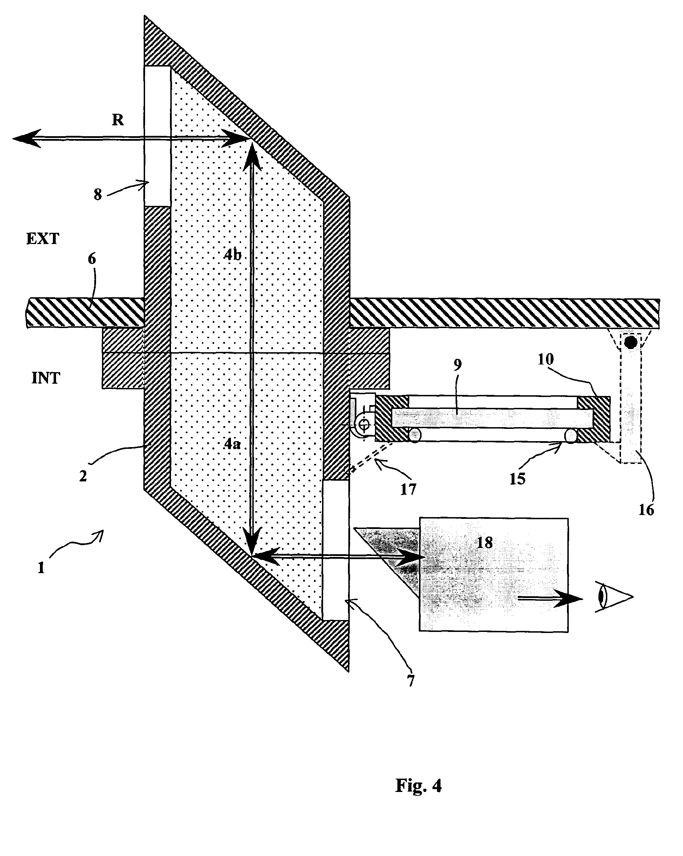

La figure 4 montre le même épiscope en position volet ouvert. Le volet pourra avantageusement être maintenu dans cette position contre l'effort de compression du ressort 14 grâce à un moyen de blocage.

On pourra par exemple utiliser un crochet basculant 16 solidaire d'une paroi 6 du véhicule. Ou encore une béquille 17, par exemple articulée sur le corps 2, et qui viendra s'interposer entre le volet 10 et le corps 2, assurant ainsi un maintien du volet 10 en position ouverte.

Ces solutions de moyens de blocage sont ici représentées de façon très schématique et en pointillés.

A titre de variante, le char pourra aussi être équipé d'un support de jumelles. Dans ce cas les jumelles assureront elles-même le maintien du volet et la fermeture de ce dernier sera automatique lors du retrait des jumelles.

Dans cette position ouverte du volet il est possible de regarder au travers de l'épiscope avec un moyen optique de mesure/observation tel que des jumelles 18 de télémétrie laser.

Les rayons lumineux traversent en effet alors l'épiscope 1 sans rencontrer de filtre laser. Les jumelles peuvent ainsi envoyer un faisceau laser de télémétrie vers une cible au travers de l'épiscope et sont donc pleinement opérationnelles. La précision de la mesure est sensiblement la même que lors d'une utilisation en dehors du véhicule. La télémétrie est ainsi assurée sous protection.

On notera que l'utilisateur reste protégé du rayonnement laser grâce aux protections internes que comportent normalement les jumelles de télémétrie.

Lorsque l'utilisateur n'utilise plus les jumelles (et que le moyen de blocage est retiré) le volet de protection poussé par le ressort se rabat automatiquement contre l'oculaire et la protection laser est à nouveau assurée.

Avantageusement le filtre 9 sera fixé dans le volet 10 d'une façon démontable.

Le filtre 9 peut ainsi être monté coulissant dans une rainure 19 du volet 10. La rainure 19 sera débouchante sur un des côtés du volet 10. Elle sera obturée par un bouchon 20 (figure 3).

Une telle disposition permet de remplacer le filtre laser 9 en particulier pour tenir compte d'une évolution de la menace sur le champ de bataille (lasers de longueurs d'onde différentes).

Il est possible bien entendu d'envisager d'autres modes de réalisation du moyen de solidarisation du volet permettant d'écarter celui ci de l'oculaire

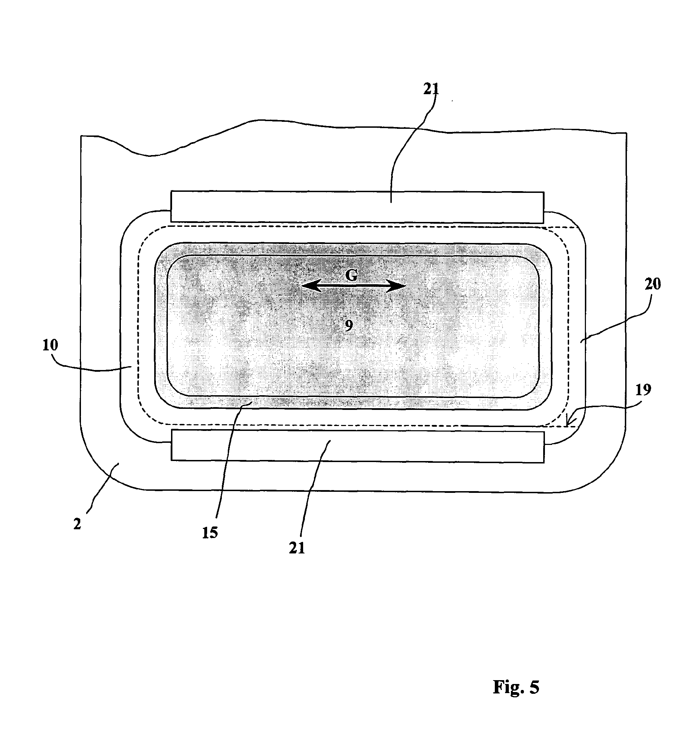

A titre d'exemple non limitatif on a ainsi représenté sur la figure 5, un volet 10 qui est monté coulissant par rapport à deux glissières 21 portées par le corps 2 de l'épiscope.

On pourra alors écarter le volet de l'oculaire en le faisant coulisser suivant la flèche G. On pourrait bien entendu faire coulisser par rapport aux glissières non pas un volet porte filtre mais le filtre lui-même.

## Revendications

1. Episcope (1) comportant un corps (2) renfermant au moins un prisme optique (4a,4b) interposé entre un oculaire (7) et un objectif (8), épiscope ***caractérisé en ce qu*'**il comprend au moins un filtre laser (9) qui recouvre l'oculaire (7) et un moyen (12,21) qui permet d'écarter le filtre (9) de l'oculaire (7) pour permettre une utilisation de l'épiscope sans filtre.

2. Episcope selon la revendication 1, **caractérisé en ce que** le filtre (9) est solidaire d'un volet (10) fixé au corps (2), le moyen permettant d'écarter le filtre étant constitué par une articulation (12) qui autorise un basculement du volet (10) par rapport au corps (2).

3. Episcope selon la revendication 1, **caractérisé en ce que** le moyen permettant d'écarter le filtre est constitué par au moins une glissière (21) solidaire du corps (2) et permettant un coulissement d'un volet (10) portant le filtre (9) ou du filtre lui-même.

4. Episcope selon la revendication 2, **caractérisé en ce que** l'articulation (12) incorpore un moyen ressort (14) assurant un retour du volet (10) devant l'oculaire (7).

5. Episcope selon la revendication 4, **caractérisé en ce qu'**au moins un joint d'étanchéité/amortissement (15) est interposé entre le volet (10) et le corps (2) de l'épiscope

6. Episcope selon une des revendications 2 à 5, **caractérisé en ce qu'**il comporte un moyen de blocage (16,17) assurant un maintien du volet (10) en position écartée.

7. Episcope selon une des revendications 2 à 6, **caractérisé en ce que** le filtre (9) est fixé d'une façon démontable par rapport au volet (10).
